Europäisches Patentamt

European Patent Office

Office européen des brevets

(11) Numéro de publication : **0 465 429 B1**

(19)

## (12) FASCICULE DE BREVET EUROPEEN

(45) Date de publication du fascicule du brevet :
**14.09.94 Bulletin 94/37**

(51) Int. Cl.⁵ : **G03H 1/20,** G02B 5/32,
G02B 27/10

(21) Numéro de dépôt : **91810524.8**

(22) Date de dépôt : **04.07.91**

(54) **Procédé de reproduction d'un élément optique holographique et utilisation de l'élément optique holographique obtenu.**

(30) Priorité : **04.07.90 CH 2287/90**

(43) Date de publication de la demande :
**08.01.92 Bulletin 92/02**

(45) Mention de la délivrance du brevet :
**14.09.94 Bulletin 94/37**

(84) Etats contractants désignés :
**CH DE FR GB LI**

(56) Documents cités :
**EP-A- 0 260 401
PATENT ABSTRACTS OF JAPAN, vol. 13, no.
284 (P-892)[3632], 29 juin 1989; & JP-A- 1 068
784
INSTRUM.AND EXP.TECHN.no.6,novem-
bre/décembre 1970,pages 1754-1755; M.M.Bu-
tusov et al.:"Light divider using a diffraction
grating and suitable for holographic schemes"**

(56) Documents cités :
**APPLIED OPTICS, vol. 28, no. 15, 15 août 1989,
pages 3405-3416; Y. AMITAI et al.:
"Holographic elements with high efficiency
and low aberrations for helmet displays"
INSTRUM.AND EXP.LECTRON;vol.8,no.7,juillet 1978,pages 809-818;V.A. VANIN:Hologram
copying (review)" & JP-A- 1 068 784**

(73) Titulaire : **CENTRE SUISSE D'ELECTRONIQUE
ET DE MICROTECHNIQUE S.A.
Maladière 71
CH-2007 Neuchâtel (CH)**

(72) Inventeur : **Herzig, Hans-Peter
Bel-Air 11
CH-2007 Neuchâtel (CH)**

(74) Mandataire : **Brulliard, Joel
c/o CENTRE SUISSE D'ELECTRONIQUE
ET DE MICROTECHNIQUE S.A.
Maladière 71
CH-2007 Neuchâtel (CH)**

EP 0 465 429 B1

## Description

La présente invention se rapporte aux éléments optiques holographiques en général et concerne plus particulièrement un procédé de reproduction d'un élément optique holographique et une utilisation de l'élément optique holographique obtenu.

Un hologramme du type mince, dont la structure comporte une succession de franges, se caractérise par un coefficient de transmission spatial variable $(K_x, K_y)$. Les procédés de reproduction d'un hologramme permettent d'enregistrer lesdites franges dans un support d'enregistrement holographique. Ledit hologramme à reproduire est appelé hologramme de fabrication. Ledit support d'enregistrement est appelé hologramme de système.

Un hologramme peut être caractérisé par son efficacité de diffraction (cf. H.P. Herzig, Optics Communications, V 58 (1986), No 3, p. 144 et H. Kogelnick, Bell. Syst. Techn., J. 48 (1969), p. 2909). L'efficacité de diffraction minimale est obtenue lorsque la condition de Bragg est remplie en tous points de l'hologramme. L'art antérieur enseigne que les hologrammes de type épais sont les seuls à permettre l'obtention d'une efficacité de diffraction proche de 100%.

La reproduction d'éléments optiques holographiques peut être obtenue selon deux techniques principales connues qui sont décrites par William T. Rhodes, "Hologram Copying", Handbook of Optical Holography, Academic Press, pp. 373 à 378. Une première technique permet l'obtention d'une copie d'un hologramme par une méthode de reconstruction. Une deuxième technique est basée sur une méthode de reproduction par contact.

Dans la première méthode un hologramme de système est obtenu par enregistrement soit d'une image virtuelle, soit d'une image réelle d'un objet; ces images étant préalablement enregistrées dans un premier hologramme appelé hologramme de fabrication. Lesdites images sont engendrées par diffraction d'une onde de reconstruction sur ledit hologramme de fabrication. Le diagramme d'interférence formé par l'onde de reconstruction diffractée et une onde de référence est enregistré dans un support d'enregistrement holographique pour constituer ledit hologramme de système.

Cette méthode présente le désavantage de requérir la même stabilité interférométrique que celle nécessitée lors de l'enregistrement de l'hologramme de fabrication. L'efficacité de diffraction est obtenue par le contrôle des intensités lumineuses de l'onde de reconstruction diffractée et de l'onde de référence et, en particulier, de l'angle d'incidence.

La deuxième méthode consiste à mettre en contact un support d'enregistrement holographique directement contre l'hologramme de fabrication. L'éclairement de cet hologramme de fabrication par une onde plane engendre un faisceau transmis d'ordre zéro et un faisceau diffracté de premier ordre. L'hologramme de système est ici obtenu après enregistrement du diagramme d'interférence formé par interférence entre ledit faisceau d'ordre zéro et ledit faisceau diffracté de premier ordre.

Cette deuxième méthode présente le désavantage de requérir une onde de reconstruction identique à l'onde de référence d'origine ayant été utilisée pour l'enregistrement de l'hologramme de fabrication. Dans le cas contraire, la résolution de l'image reconstruite à partir de l'hologramme de système, serait réduite par rapport à l'image reconstruite à partir de l'hologramme de fabrication. De même, le champ de l'hologramme de système serait réduit par rapport à celui de l'hologramme de fabrication. De plus, un changement de la longueur d'onde de ladite onde de reconstruction entraîne une image reconstruite par l'hologramme de fabrication de mauvaise qualité. En d'autres termes, la reproduction, à l'identique, de l'hologramme de fabrication requiert l'utilisation d'une onde de reconstruction possédant les mêmes courbure, incidence et longueur d'onde que l'onde de référence originale.

Une limitation majeure des méthodes de l'art antérieur est de ne permettre l'obtention que d'un hologramme de système dont les franges successives le composant sont identiques à celles de l'hologramme de fabrication. En d'autres termes, les deux hologrammes de fabrication et de système ont le même coefficient de transmission spatiale. Une conséquence de ce qui précède est que l'on ne peut pas obtenir à la fois un hologramme de système de structure identique à la structure de l'hologramme de fabrication et un hologramme de système disposant d'une efficacité de diffraction minimale en tous points pour une onde incidente donnée. En effet, l'efficacité de diffraction des éléments holographiques de structure non uniforme obtenus par des méthodes connues, n'est pas minimale en tous points dudit élément holographique.

Aussi un objet de l'invention est-il un procédé de reproduction d'un élément optique holographique dans une émulsion holographique susceptible d'enregistrer un hologramme ayant une efficacité de diffraction minimale en tous points, lequel procédé ne doit pas comporter les limitations citées précédemment.

Un autre objet de l'invention est un procédé de reproduction d'un élément optique holographique assurant une transformation du front d'onde et une efficacité de diffraction prédéterminées.

En d'autres termes, un objet de l'invention est un procédé permettant d'obtenir un hologramme de système de structure non uniforme et d'efficacité de diffraction minimale en tous points du plan dudit hologramme de système.

Les caractéristiques de l'invention sont définies dans les revendications.

Un avantage du procédé de l'invention pour l'enregistrement d'un élément optique holographique réside dans le faible coût de la mise en oeuvre dudit procédé ainsi que de l'hologramme de système de haute efficacité obtenu.

Un autre avantage du procédé de l'invention est d'obtenir un enregistrement continu et de haute efficacité d'un hologramme de système de structure non uniforme.

D'autres objets, caractéristiques et avantages de la présente invention apparaîtront plus clairement à la lecture de la description suivante, faite à titre purement illustratif et en relation avec les dessins joints dans lesquels :

les figures 1.a et 1.b montrent deux techniques de l'art antérieur permettant l'enregistrement d'un hologramme par une méthode de reconstruction (fig. 1.a) ou par une méthode de reproduction par contact (fig. 1.b) et

la fig. 2 montre une configuration possible utilisée pour la reproduction d'un élément optique holographique conformément à l'invention.

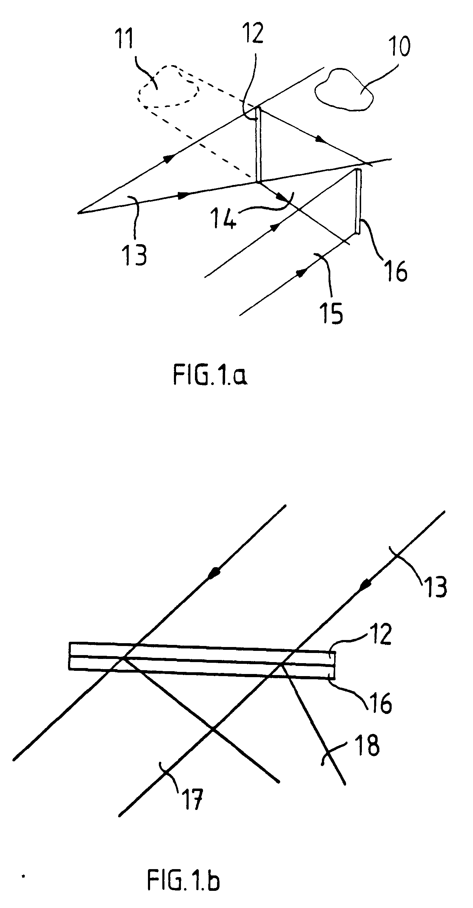

Les figures 1.a et 1.b illustrent les deux techniques de l'art antérieur mentionné dans l'introduction de la présente description.

Le tableau 1 ci-dessous donne la correspondance entre les signes de référence figurant dans la figure 1 et les éléments qu'ils désignent.

| SIGNES DE REFERENCE | ELEMENTS |
|---|---|
| 10 | image réelle |
| 11 | image virtuelle |
| 12 | hologramme de fabrication |
| 13 | onde de reconstruction |
| 14 | onde de reconstruction diffractée |
| 15 | onde de référence |
| 16 | hologramme de système |
| 17 | faisceau transmis d'ordre zéro |
| 18 | faisceau diffracté de premier ordre |

Tableau 1

La figure 1.a montre un hologramme de système (16) obtenu par enregistrement soit d'une image virtuelle (11), soit d'une image réelle (10) d'un objet, ces images étant préalablement enregistrées dans un premier hologramme appelé hologramme de fabrication (12). Lesdites images sont générées par diffraction d'une onde de reconstruction (13) sur ledit hologramme de fabrication. Le diagramme d'interférence formé par l'onde de reconstruction diffractée (14) et une onde de référence (15) est enregistré dans un support d'enregistrement holographique pour constituer ledit hologramme de système.

La figure 1.b montre un support d'enregistrement holographique, devant constituer ledit élément optique holographique de système (16), mis directement en contact contre l'hologramme de fabrication (12). L'éclairement de cet hologramme de fabrication par une onde de reconstruction (13) génère un faisceau transmis (17) d'ordre zéro et un faisceau diffracté (18) de premier ordre. L'hologramme de système est ici obtenu après enregistrement du diagramme d'interférence formé par interférence entre ledit faisceau d'ordre zéro et ledit faisceau diffracté de premier ordre.

Une configuration possible permettant l'enregistrement d'un hologramme de fabrication 1 conformément à l'invention est représentée à la fig, 2.

L'hologramme de fabrication 1 est réalisé par une méthode connue, par exemple, par enregistrement préalable, dans un support d'enregistrement holographique porté par un substrat, du diagramme d'interférence formé dans ladite couche par interférence entre un faisceau objet et un faisceau de référence. Le matériau holographique est développé ultérieurement pour former l'hologramme de fabrication 1. Ledit hologramme de fabrication est, par exemple, un hologramme mince dont la structure peut être représentée par un vecteur à deux dimensions $(K_x, K_y)$. Ce premier hologramme est utilisé pour la production de l'élément optique holographique de système 2.

Le support d'enregistrement holographique devant constituer ledit élément optique holographique de système est mis directement en contact contre l'hologramme de fabrication.

Conformément au procédé de l'invention, une onde initiale 3 parcourt un chemin optique sur lequel se situe un hologramme 6, par exemple généré par ordinateur. Ledit hologramme généré par ordinateur est, par exemple, un hologramme mince du type synthétique et de faible efficacité. L'onde initiale ainsi perturbée constitue une onde incidente 7. Ladite onde incidente éclaire ledit hologramme de fabrication générant la transmission du faisceau d'ordre zéro 4 et la diffraction du faisceau de premier ordre 5. L'enregistrement du diagramme d'interférence formé par interférence entre ledit faisceau transmis d'ordre zéro et ledit faisceau diffracté de premier ordre, permet de réaliser l'élément optique holographique de système.

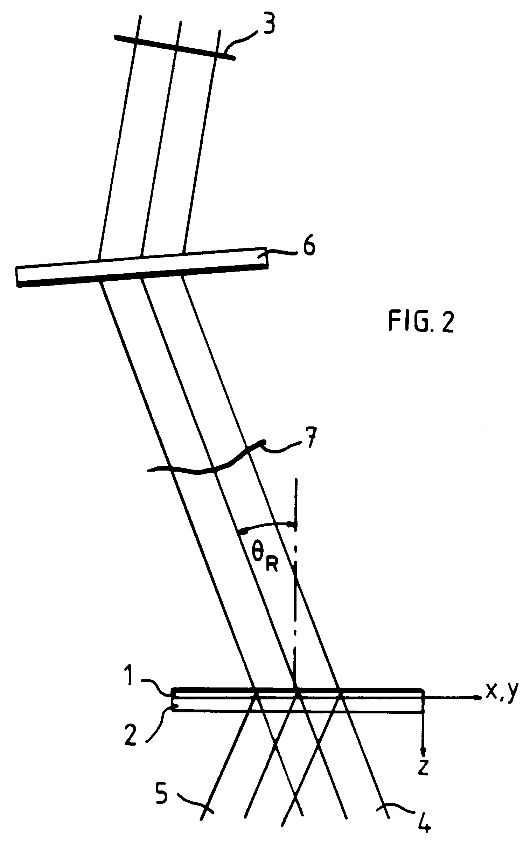

L'élément optique holographique de système que l'on souhaite obtenir a une structure représentée par un vecteur $K(x, y)$ à trois composantes $(K_x, K_y, K_z)$. Les axes X, Y, Z sont tels que définis à la figure 2. Les composantes $K_x$ et $K_y$ caractérisent la transformation du front d'onde de l'onde incidente, alors que la composante selon l'axe z, $K_z$, qui n'est fonction que de x et de y, détermine l'efficacité de diffraction. L'efficacité de diffraction minimale est obtenue lorsque la condition de Bragg est remplie en tous points de l'hologramme de fabrication.

L'élément optique holographique de système étant obtenu par enregistrement par contact, les composantes vectorielles $K_x$ et $K_y$, selon les axes x et y, dudit élément optique holographique de système sont identiques aux composantes vectorielles correspondantes de l'hologramme de fabrication.

La composante vectorielle $K_z$ selon l'axe z de l'élément optique holographique de système est définie par la valeur, en chaque point (x, y), de l'angle d'incidence $\Theta_R$ de l'onde incidente. La définition dudit angle d'incidence est obtenue par l'introduction de l'hologramme généré par ordinateur sur le trajet optique de l'onde initiale.

En d'autres termes, l'introduction de l'hologramme généré par ordinateur sur le trajet optique de l'onde initiale perturbe ladite onde initiale et engendre l'onde incidente dont les directions d'illumination en chaque point (x, y) de l'hologramme de fabrication sont définies de manière que l'efficacité de diffraction en ces points (x, y) dudit élément optique holographique de système soit maximale.

Les valeurs, en chaque point (x,y) du plan de l'hologramme de système, de la composante vectorielle $K_z$ pour lesquelles l'efficacité de diffraction est maximale en chacun desdits points imposent chacune des directions d'illumination locale dans le plan de l'hologramme de fabrication. La détermination desdites directions d'illumination ou desdits angles d'incidence permet de déduire la forme du front d'onde à imposer à l'onde incidente. Il résulte que, connaissant la forme nécessaire de l'onde incidente, les caractéristiques de l'hologramme généré par ordinateur sont définies en fonction du front d'onde de l'onde initiale.

Une utilisation préférée de l'élément optique holographique à haute efficacité obtenue selon le procédé de l'invention est un séparateur de faisceaux de rapport variable entre les intensités lumineuses, respectivement transmise et diffractée.

Les séparateurs de faisceaux optiques faisant appel à un élément optique holographique, utilisent un hologramme de structure uniforme, Leur principe de fonctionnement est alors basé sur une variation dans le temps de l'angle d'incidence de l'onde incidente. Ladite variation de l'angle d'incidence s'accompagne, principalement, d'une modification de l'angle de diffraction de l'onde diffractée.

Conformément à l'application préférée, le principe de fonctionnement du séparateur de faisceaux optiques incorporant un élément optique holographique non uniforme à haute efficacité obtenu selon le procédé de l'invention est basé uniquement sur un déplacement latéral dudit hologramme optique. L'élément optique holographique est éclairé localement. Le rapport entre les intensités lumineuses du faisceau d'ordre zéro et de l'un des faisceaux diffractés est fonction des caractéristiques locales de la structure holographique.

Ledit séparateur de faisceaux optiques ne présente pas les inconvénients mentionnés ci-dessus. De plus un tel séparateur de faisceaux permet d'engendrer une variation continue de l'intensité lumineuse de l'onde transmise et de l'onde diffractée.

## Revendications

1. Procédé de reproduction d'un élément optique holographique dit de fabrication (1) comprenant:
    - la réalisation préalable dudit élément optique holographique de fabrication destiné à la production d'un élément optique holographique dit de système (2);
    - le positionnement d'un support d'enregistrement holographique, devant constituer ledit élément optique holographique de système, directement contre ledit élément optique holographique de fabrication;
    - l'éclairement dudit élément optique holographique de fabrication par une onde initiale (3) engendrant la transmission d'un faisceau d'ordre zéro (4) et la diffraction d'un faisceau diffracté de premier ordre (5) et
    - l'enregistrement, dans ledit support d'enregistrement holographique, des franges d'interférence formées par l'interférence entre ledit faisceau transmis d'ordre zéro et ledit faisceau diffracté de premier ordre, pour constituer l'élément optique holographique de système;

    **caractérisé en ce qu'**un hologramme (6) est introduit sur le trajet optique de l'onde initiale et réalisé de telle sorte que ladite onde initiale soit perturbée pour constituer une onde incidente (7) dont les directions d'illumination en chaque point (x, y) du plan de l'hologramme de fabrication sont définies de manière à remplir la condition de Bragg en tous points (x, y) dudit élément optique holographique de fabrication, de sorte que l'efficacité de diffraction en ces points (x, y) soit maximale.

## Patentansprüche

1. Verfahren zur Reproduktion eines optischen herstellungsholographischen Elementes (1), umfassend:
    - die vorherige Realisierung des optischen herstellungsholographischen Elements, bestimmt zur Herstellung eines optischen systemholographischen Elements (2);
    - die Positionierung eines holographischen Aufzeichnungsträgers, vor dem Konstituieren des optischen systemholographischen Elements, direkt auf dem optischen herstellungsholographischen Element;
    - die Belichtung des optischen herstellungsholographischen Elements mittels einer anfänglichen Welle (3), die die Übertragung eines Bündels der Ordnung null (4) und die Diffraktion eines Diffraktionsbündels erster Ordnung (5) bewirkt, und
    - die Aufzeichnung auf dem holographischen Aufzeichnungsträger der Interferenzlinien, gebildet durch die Interferenz zwischen dem übertragenen Bündel der Ordnung null und dem Diffraktionsbündel der ersten Ordnung zum konstituieren des optischen systemholographischen Elements,

    dadurch gekennzeichnet, dass ein Hologramm (6) in die optische Bahn der anfänglichen Welle eingeführt wird und derart realisiert wird, dass die anfängliche Welle gestört wird zum konstituieren einer auftreffenden Welle (7), deren Belichtungsrichtungen in jedem Punkt (x, y) der Ebene des Herstellungshologramms die Braggsche Beziehung erfüllen und die Effizienz der Diffraktion in diesen Punkten (x, y) des optischen systemholographischen Elements maximal wird.

## Claims

1. Method for reproducing a production holographic optical element (1) comprising:
    - the prior production of the said production holographic optical element intended for the production of a system holographic optical element (2);
    - the positioning of a holographic recording support, intended to constitute the said system holographic optical element, directly against the said production holographic optical element;
    - the illumination of the said production holographic optical element by an initial wave (3) bringing about the transmission of a zero-order beam (4) and the diffraction of a first-order diffracted beam (5), and
    - the recording, in the said holographic recording support, of the interference fringes formed by the interference between the said zero-order transmitted beam and the said first-order diffracted beam, in order to form the system holographic optical element;

    characterised in that a hologram (6) is introduced on the optical path of the initial wave and produced so that the said initial wave is interfered with in order to form an incident wave (6), whose directions of illumination at each point (x, y) on the plane of the production hologram are defined so that' the Bragg condition is fulfilled and the diffraction efficiency at these points (x, y) of the said system holographic optical element is at its maximum.

FIG.1.a

FIG.1.b

FIG. 2